# EUROPÄISCHE PATENTSCHRIFT

(11) **EP 0 965 221 B1**
(45) Veröffentlichungstag und Bekanntmachung des Hinweises auf die Patenterteilung: **03.05.2006**
(21) Anmeldenummer: 98906840.8
(22) Anmeldetag: 24.01.1998
(51) Int. Cl.: H04M 15/00

(54) **VERFAHREN UND SCHALTUNGSANORDNUNG ZUM BETREIBEN EINES TELEKOMMUNIKATIONSNETZWERKES**
METHOD AND CIRCUIT FOR OPERATING A TELECOMMUNICATIONS NETWORK
PROCEDE ET CIRCUIT POUR EXPLOITER UN RESEAU DE TELECOMMUNICATION

(30) Priorität: 06.03.1997 DE 19709240
(43) Veröffentlichungstag der Anmeldung: 22.12.1999
(73) Patentinhaber: Deutsche Telekom AG, 53113 Bonn (DE)
(72) Erfinder: HERLING, Wolfgang, D-53773 Hennef (DE)
(86) Internationale Anmeldenummer: PCT/DE1998/000213
(87) Internationale Veröffentlichungsnummer: WO 1998/039908

(56) Entgegenhaltungen:
- WO-A-96/34471
- US-A- 5 148 474
- US-A- 5 602 907

## Beschreibung

Die Erfindung betrifft ein Verfahren zum Betreiben eines Telekommunikationsnetzwerkes nach dem Oberbegriff der Patentansprüche 1 bzw. 2 sowie ein System bzw. eine Schaltungsanordnung nach dem Oberbegriff des Patentanspruchs 7.

In den bekannten analogen Kommunikationsnetzen sind bereits Verfahren zur Kommunikations-Tarifierung bekannt. Diese Verfahren bieten die Möglichkeit der Verkehrssteuerung im Netz über den Preis. So wurden zum Beispiel sogenannte "Mondscheintarife" in den 80er Jahren eingesetzt, die mit einer starren, in wenige Tarifgruppen unterteilten Tarifstruktur arbeiteten. Obwohl durch diese Verfahren grundsätzlich die Möglichkeit der Verkehrssteuerung über den Preis realisiert wurde, ist ein derartiges Verfahren nicht zur Rückwärtstarifierung und Vorwärtstarifierung geeignet. Außerdem ist durch die Einteilung in bestimmte zeitabhängige Preisgruppen nicht die tatsächliche Leitungsbelastung berücksichtigt. Es sind in neuerer Zeit auch Methoden bekanntgeworden, die eine Messung des Telefonierverhaltens von Einzelpersonen oder auch von Personengruppen in relativ nicht aufwendiger Weise ermöglichen. Über sogenannte Call Behaviour Analysis-Verfahren lassen sich diese Profile meßtechnisch erfassen bzw. durch Auswertung von Meßergebnissen erstellen. In "telekom/praxis", Heft 9/96, Band 73 ist von John Taylor unter dem Titel "Call Behaviour Analysis" auf den Seiten 39 und 40 ein sogenanntes Call Behaviour Analysis (CBA) System der Firma Hewlett-Packard beschrieben. Ein derartiges System eignet sich zwar für die Steuerung des Verkehrs durch die dynamische Messung der tatsächlichen zu einem Zeitpunkt bestehenden Netzwerkbelastung, es zeigt jedoch keine Möglichkeit der Rückwärtstarifierung und Vorwärtstarifierung bzw. Daten-/Informationsdokumentation auf.

In der WO-A-96 34471 (Katz Aaron B), 31. Oktober 1996, ist ein Verfahren beschrieben, das den Ablauf eines Kaufvorgangs mit Identifikationsnummer beschreibt, wobei sich zuerst der Anrufer bzw. Käufer und der Angerufene bzw. Verkäufer bezüglich des Kaufs/Verkaufs einigen. Danach tätigt der Anrufer Vorgänge, damit der Geldbetrag für den Kauf berechnet bzw. abgebucht werden kann. Die Eingaben wie Kontostand und persönliche Identifikationsnummer werden geprüft und bei positivem Prüfergebnis das Entsprechende veranlaßt. Damit also ein Kauf bzw. Verkauf erfolgen kann, benötigt der Käufer eine persönliche Identifikationsnummer. Die Ausgabe und Verwaltung dieser werden vom Verkäufer veranlaßt, wenn der Käufer sich als Kunde des Verkäufers in die Kundenliste aufnehmen läßt. Nachdem der Kunde als Käufer registriert ist und eine persönliche Identifikationsnummer erhalten hat, können erst Geschäfte getätigt werden. Die Rollenverteilung steht also fest, der Anrufer ist der Käufer und der Angerufene der Verkäufer.

Die Durchführung und Vollziehung von spontanen Käufen/Verkäufen, wie zum Beispiel das unmittelbare Reagieren eines Lesers auf eine Privatannonce in einer Tageszeitung bezüglich eines Kaufgesuches/Kaufangebotes eines Kaufwilligen (Käufer) / Verkaufswilligen (Verkäufer) und die gleichzeitige. Durchführung und rechtliche Vollendung des Kauf-/Verkaufvorgangs mittels eines Telekommunikationsnetzes wird dadurch nicht ermöglicht.

Außerdem ist in der US-A-5 602 907 (Hata Emi et al.), 11. Februar 1997, ein Verfahren beschrieben, wobei während einer Telekommunikationsverbindung ein beteiligtes Terminal an das Telekommunikationsnetz eine Information übermittelt, daß der eingestellte Abrechnungstarif für das Kommunikationsentgelt zwischen den jeweiligen Terminals auf einen bestimmten anderen Abrechnungstarif umgestellt wird. Nach Übermittlung dieser Information belastet das Telekommunikationsnetz das jeweilige Terminal mit dem neuen Tarif. Das heißt mit anderen Worten, das hier beschriebene Verfahren hat den Wechsel des Abrechnungstarifs für eine Telekommunikationsverbindung während des Bestehens einer Telekommunikationsverbindung zum Gegenstand. Es ist nicht möglich, mit Hilfe dieses Verfahrens unabhängig vom Tarifsystem eines Telekommunikationsnetzes einen beliebigen Geldwert zwischen Anrufer und Angerufenen zu vereinbaren und mit Quittung zu transferieren.

Der Erfindung liegt deshalb die Aufgabe zugrunde, ein Verfahren und eine Schaltungsanordnung für Telekommunikationsnetze zu schaffen, die neue Dienstleistungen durch integrierte Funktionen, wie Vorwärts-/Rückwärtstarifierung mit Quittung und Dokumentation von Daten bzw. Informationen ermöglichen.

Die erfindungsgemäße Lösung der Aufgabe ist im Kennzeichen des Patentanspruches 1 für das Verfahren charakterisiert.

Die erfindungsgemäße Lösung für die Schaltungsanordnung ist im Kennzeichen des Patentanspruches 3 gekennzeichnet.

Weitere Lösungen bzw. Ausgestaltungen der Erfindung sind für das Verfahren in den Kennzeichen des Patentanspruches 2 und für die Schaltungsanordnung in den Patentansprüchen 4 und 5 charakterisiert.

Durch die Integration von Funktionsabläufen bzw. prozessorgesteuerten Operationen für die Rückwärtstarifierung und die Vorwärtstarifierung sowie für die Dokumentation von Daten bzw. Informationen ist es möglich, prozessorgesteuert automatisch eine Rückwärtstarifierung oder eine Vorwärtstarifierung und/oder eine Dokumentation von Daten bzw. Informationen auch ohne Identifikationsnummer sicherzustellen. Dadurch werden neue Dienstleistungen wie zum Beispiel die Rückwärtstarifierung ermöglicht. Der Angerufene kann dem Anrufer einen beliebigen Betrag, zum Beispiel für eine Beratungs- oder Serviceleistung eines Rechtsanwaltes oder einer Dienstleistungsfirma über das vorhandene Telekommunikationsnetz in Rechnung stellen. Der Betreiber des Telekommunikationsnetzes wird vom Angerufenen und vom Anrufer beauftragt, diesen Betrag vom Anrufer als Inkassoleistung einzuziehen. Bei der Rückwärtstarifierung möchte zum Beispiel der Anrufer vom Angerufenen, beispielsweise wiederum einem Rechtsanwalt, eine kostenpflichtige Information erhalten. Nach Einigung über den Betrag sind Anrufer und Angerufener damit einverstanden, daß dieser Betrag dem Anrufer vom Telekommunikationsnetzbetreiber im Inkassoverfahren in Rechnung gestellt wird. Der Telekommunikationsnetzbetreiber leitet das vom Anrufer inkassierte Entgelt an den Angerufenen weiter.

Die neue Dienstleistung "Vorwärtstarifierung" ermöglicht es, daß der Anrufer dem Angerufenen einen beliebigen Betrag, zum Beispiel für eine Beratungs- oder Serviceleistung, über ein Telekommunikationsnetz in Rechnung stellen kann. Der Betrag wird vom Netzwerkbetreiber prozessorgesteuert automatisch als Inkassoleistung eingezogen.

Darüberhinaus ist es durch das erfindungsgemäße Verfahren und durch das erfindungsgemäße System möglich, eine neue Dienstleistung "Datendokumentation über ein Telekommunikationsnetz" erstmals zu ermöglichen. Für den Angerufenen ist es durch das erfindungsgemäße Verfahren und durch das erfindungsgemäße System bzw. die erfindungsgemäße Schaltungsanordnung belegbar, daß eine bestimmte Information bzw. bestimmte Daten zum Anrufer gelangt ist/sind, und es ist für den Anrufer belegbar, daß eine bestimmte Information zum Angerufenen gelangt ist. Mit dieser Dienstleistung können zum Beispiel Verträge, die fernmündlich zwischen Angerufenem und Anrufer geschlossen werden, von dritter Seite - dem Telekommunikationsnetz - bezüglich des Tatbestandes der Vertragsschließung und des Vertragsinhalts bestätigt werden. Bei dieser Dienstleistung wird also der Austausch beliebiger Daten dokumentiert, während bei der Rückwärtstarifierung und Vorwärtstarifierung bestimmte Geldbeträge zwischen Anrufer und Angerufenem ausgetauscht bzw. nach Vereinbarung übertragen werden, wobei der Austausch und die Höhe des Betrags prozessorgesteuert bzw. automatisch dokumentiert werden.

Die Erfindung wird im folgenden anhand von in der Zeichnung prinzipiell dargestellten Ausführungsbeispielen detailliert beschrieben.

In der Zeichnung bedeuten:
- Fig. 1: System zur Rückwärts- und Vorwärtstarifierung;
- Fig. 2: ein System zur Informations- oder Datendokumentation über ein Telekommunikationsnetz.

In den Figuren, den Patentansprüchen, der Beschreibung und in der Zusammenfassung sind gleiche Teile mit gleichen Bezugszeichen bezeichnet, die in der hinten anhängenden Liste der Bezugszeichen angegeben sind.

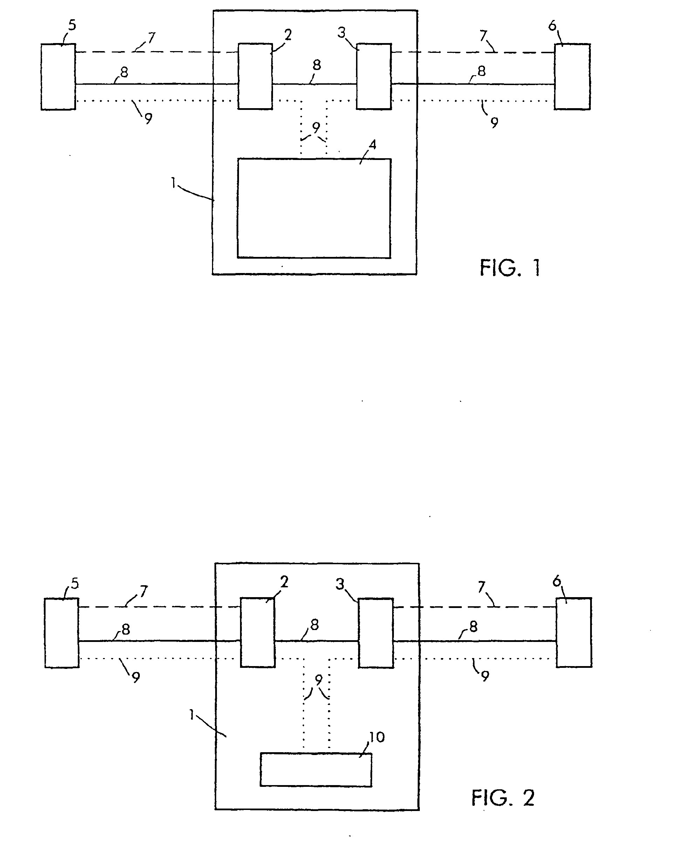

In Fig. 1 ist ein System bzw. ein Prinzipschaltbild für die Dienstleistungen "Rückwärtstarifierung und vorwärtstarifierung" in einem Telekommunikationsnetz 1 gezeigt. Das Telekommunikationsnetz 1 besteht aus einer für den Anrufer zuständigen Vermittlungseinrichtung 2 und einer für den Angerufenen zuständigen Vermittlungseinrichtung 3. Außerdem besteht das Telekommunikationsnetz 1 aus einer Schaltungsanordnung zur Entgegennahme der Aufträge für die Rückwärts- bzw. Vorwärtstarifierung sowie zur Erstellung von Rechnungen, zur Kontrolle der Zahlungseingänge, gegebenenfalls zur Mahnung und Überweisung der eingegangenen Beträge u.s.w.. Ein Endgerät 5 des Anrufers ist über einen Zeichengabekanal 7, einen Nachrichtenkanal 8 und einen Informationsweg 9 für Rückwärts- und Vorwärtstarifierung mit der für den Anrufer zuständigen Vermittlungseinrichtung 2 verbunden. Ein Endgerät 6 des Angerufenen ist ebenfalls über einen Zeichengabekanal 7, einen Nachrichtenkanal 8 und einen Informationsweg 9 für Rückwärtstarifierung bzw. Vorwärtstarifierung mit der für den Angerufenen zuständigen Vermittlungseinrichtung 3 des Telekommunikationsnetzes 1 verbunden. Darüberhinaus sind die Vermittlungseinrichtungen 2 und 3 für den Anrufer und für den Angerufenen über den Nachrichtenkanal 8 miteinander verbunden und über getrennte Informationswege 9 mit der Schaltungsanordnung bzw. -einrichtung 4 zur Entgegennahme der Aufträge für die Rückwärts-/Vorwärtstarifierung sowie für die Erstellung der Rechnung, der Kontrolle des Zahlungseinganges und gegebenenfalls der Mahnung und Überweisung des eingegangenen Betrages. Diese Einrichtung bzw. Schaltungsanordnung 4 führt von der Anruferseite her gesehen folgende Funktionen aus:

Bei der Rückwärtstarifierung steuert sie die Abrechnung und gegebenenfalls die Mahnung für den Anrufer und bei der Vorwärtstarifierung steuert sie die Überweisung des vom Angerufenen eingenommenen Entgeltes an den Anrufer. Von der Seite des Angerufenen (Endgerät 6) aus gesehen steuert die Schaltungsanordnung bzw. die Einrichtung 4 bei der Vorwärtstarifierung die Abrechnung und gegebenenfalls die Mahnung an den Angerufenen und bei der Rückwärtstarifierung die Überweisung des vom Anrufer eingenommenen Entgeltes an den Angerufenen.

Die Zeichengabekanäle 7 zwischen dem Telekommunikationnetz 1 und dem Endgerät 5 des Anrufers sowie zwischen dem Telekommunkationsnetz 1 und dem Endgerät 6 des Angerufenen signalisieren, ob ein Nachrichtenaustausch zwischen Anrufer und Angerufenem oder ein Datenaustausch im Rahmen der Dienstleistungen "Rückwärtstarifierung" oder "Vorwärtstarifierung" erfolgt.

Der Nachrichtenkanal 8 dient dem Nachrichtenaustausch zwischen dem Endgerät 5 des Anrufers und dem Endgerät 6 des Angerufenen; dies kann zum Beispiel die normale Telefonverbindung im Telefonnetz sein.

Die Informationswege 9 dienen für die Dienstleistung "Rückwärtstarifierung" bzw. "Vorwärtstarifierung". Im nachfolgenden wird anhand der Fig. 1 der Operations- bzw. Funktionsablauf der "Rückwärtstarifierung" und der "Vorwärtstarifierung" beschrieben.

Dazu müssen folgende Vorbedingungen bestehen:

Zwischen Anrufer und Angerufenem besteht ein transparenter Nachrichtenkanal - zum Beispiel eine Telefonverbindung zwischen Anrufer und Angerufenem im Telefonnetz der Deutschen Telekom -. Anrufer und Angerufener haben sich verständigt, daß eine Vorwärts- oder Rückwärtstarifierung über das Telekommunikationsnetz erfolgen soll.

Folgende grundsätzliche Operationen bzw. Verfahren werden nun ausgeführt:

### Fall "Rückwärtstarifierung"

o **Schritt bzw. Operation 1.1**
   Der Anrufer signalisiert über ein Endgerät 5 dem Telekommunikationsnetz 1
   - , daß die Dienstleistung "Rückwärtstarifierung" in Anspruch genommen werden soll;
      der Anrufer löst ein entsprechendes Signal aus, welches vom Endgerät 5 über den Zeichengabekanal 7 zur Vermittlungseinrichtung 2 weitergeleitet wird. Die Vermittlungseinrichtung 2 stellt daraufhin den Informationsweg 9 zwischen Endgerät 5 und Schaltungsanordnung 4 her. Der Abschnitt zwischen Endgerät 5 und Vermittlungseinrichtung 2 des Informationsweges 9 wird wie folgt realisiert:
      a) es besteht ein separater physikalischer Übertragungsweg zwischen Endgerät 5 und Vermittlungseinrichtung 2, oder
      b) der Nachrichtenkanal 8 zwischen Endgerät 5 und Vermittlungseinrichtung 2 wird vorübergehend unterbrochen. Das physikalische Übertragungsmedium, welches zwischen Endgerät 5 und Vermittlungseinrichtung 2 den Nachrichtenkanal 8 ermöglicht, wird vorübergehend vom Informationsweg 9 benutzt oder
      c) der Zeichengabekanal 7 zwischen Endgerät 5 und Vermittlungseinrichtung 2 wird mitgenutzt, um Daten des Informationsweges 9 physikalisch vom Endgerät 5 zur Vermittlungseinrichtung 2 zu übermitteln.

      Alle folgenden Eingaben, Datenaustausche erfolgen über den Informationsweg 9 Endeinrichtung 5 - Vermittlungseinrichtung 2 - Schaltungsanordnung 4:
   - die Höhe des Betrages, welcher ihm zu Gunsten des Angerufenen in Rechnung gestellt werden soll;
   - wie der Betrag in Rechnung gestellt werden soll, d.h. ==> per Inkasso durch den Telekommunikationsdiensteanbieter, der den Betrag vom Anrufer einzieht und an den Angerufenen überweist oder ==> per direkter Rechnung des Angerufenen an den Anrufer
   - das Einverständnis, daß die für die Rückwärtstarifierung erforderlichen Daten längere Zeit im Telekommunikationsnetz 1 gespeichert werden dürfen. Die Speicherung ist erforderlich, damit der Angerufene im gegebenen Fall darauf zurückgreifen kann, um seine berechtigten Forderungen gegenüber dem Anrufer zu beweisen. Die gegebenenfalls vorgenommene Unterbrechung des Nachrichtenkanals 8 zwischen Endgerät 5 und Vermittlungseinrichtung 2 wird rückgängig gemacht.
o **Schritt bzw. Operation 1.2**
   Der Angerufene signalisiert über sein Endgerät 6 dem Telekommunikationsnetz 1
   - , daß die Dienstleistung "Rückwärtstarifierung" in Anspruch genommen werden soll;
      der Anrufer löst ein entsprechendes Signal aus, welches vom Endgerät 6 über den Zeichengabekanal 7 zur Vermittlungseinrichtung 3 weitergeleitet wird. Die Vermittlungseinrichtung 3 stellt daraufhin den Informationsweg 9 zwischen Endgerät 6 und Schaltungsanordnung 4 her. Der Abschnitt zwischen Endgerät 6 und Vermittlungseinrichtung 3 des Informationsweges 9 wird wie folgt realisiert:
      a) es besteht ein separater physikalischer Übertragungsweg zwischen Endgerät 6 und Vermittlungseinrichtung 3, oder
      b) der Nachrichtenkanal 8 zwischen Endgerät 6 und Vermittlungseinrichtung 3 wird vorübergehend unterbrochen. Das physikalische Übertragungsmedium, welches zwischen Endgerät 6 und Vermittlungseinrichtung 3 den Nachrichtenkanal 8 ermöglicht, wird vorübergehend vom Informationsweg 9 benutzt oder
      c) der Zeichengabekanal 7 zwischen Endgerät 6 und Vermittlungseinrichtung 3 wird mitgenutzt, um Daten des Informationsweges 9 physikalisch vom Endgerät 6 zur Vermittlungseinrichtung 3 zu übermitteln.

      Alle folgenden Eingaben, Datenaustausche erfolgen über den Informationsweg 9 Endeinrichtung 6 - Vermittlungseinrichtung 3 - Schaltungsanordnung 4:
   - die Höhe des Betrages, welcher dem Anrufer in Rechnung gestellt werden soll;
   - wie der Betrag in Rechnung gestellt werden soll, d.h. ==> per Inkasso durch den Telekommunikationsdiensteanbieter, der den Betrag vom Anrufer einzieht und an den Angerufenen überweist oder ==> per direkter Rechnung des Angerufenen an den Anrufer
   - das Einverständnis, daß die für die Rückwärtstarifierung erforderlichen Daten längere Zeit im Telekommunikationsnetz 1 gespeichert werden dürfen. Die Speicherung ist erforderlich, damit der Angerufene im gegebenen Fall darauf zurückgreifen kann, um seine berechtigten Forderungen gegenüber dem Anrufer zu beweisen. Die gegebenenfalls vorgenommene Unterbrechung des Nachrichtenkanals 8 zwischen Endgerät 6 und Vermittlungseinrichtung 3 wird rückgängig gemacht.
o **Schritt bzw. Operation 1.3**
   Das Telekommunikationsnetz 1 hat alle erforderlichen Angaben entsprechend den Schritten 1.1 und 1.2 erhalten. Übereinstimmung der Angaben von Angerufenem und Anrufer insbesondere hinsichtlich der Höhe des Geldbetrages, der Art der Rechnungsstellung und die Vorlage der Einverständnisse zur Speicherung von Daten wird geprüft. Weichen Angaben voneinander ab, erfolgt automatisch eine Rückfrage durch das Telekommunikationsnetz 1 an Anrufer und Angerufenen.
   Bei Vollständigkeit und Übereinstimmung der Angaben erfolgt eine Meldung, daß beauftragte Rechnungsstellung erfolgen wird (Inkassofall), bzw. das Telekommunikationsnetz 1 veranlaßt die Weitergabe von Daten des Anrufers an das Endgerät 6 des Angerufenen, sodaß dieser dem Anrufer selbst eine Rechnung erstellen und gegebenenfalls über das Kommunikationsnetzwerk 1 senden kann. Beendigung der Dienstleistung "Rückwärtstarifierung".

### Fall "Vorwärtstarifierung"

erfolgt analog der Operationen der "Rückwärtstarifierung", das heißt der Informationsfluß für die kostenpflichtige Leistung und der Geldfluß sind genau umgekehrt.

In Fig. 2 ist eine Schaltungsanordnung bzw. ein System für die Dienstleistung "Datendokumentation über ein Telekommunikationsnetz" dargestellt. Das System bzw. die Schaltungsanordnung nach Fig. 2 enthält wiederum das Telekommunikationsnetz 1 mit einer Vermittlungseinrichtung 2 bzw. 3 für den Anrufer bzw. den Angerufenen, einer Einrichtung bzw. Schaltungsanordnung 10 zur Entgegennahme der Aufträge für "Datendokumentation über ein Telekommunikationsnetz" sowie deren Erledigung. Außerdem sind die Vermittlungseinrichtungen 2 bzw. 3 mit einem oder mehreren Endgeräten 5 bzw. 6 des Anrufers bzw. des Angerufenen verbunden. Zur Verbindung dienen wiederum die Zeichengabekanäle 7, der Nachrichtenkanal 8 und die Informationswege 9.

Die Einrichtung 10 ist mit den Informationswegen 9 verbunden. Mit der Dienstleistung "Datenkommunikation über ein Telekommunikationsnetz" können Verträge, die fernmündlich zwischen Angerufenem und Anrufer abgeschlossen werden, von dritter Seite - dem Telekommunikationsnetz - bezüglich des Tatbestandes der Vertragsschließung und des Vertragsinhalts bestätigt werden. Vorbedingung ist, daß zwischen Anrufer und Angerufenem ein transparenter Nachrichtenkanal besteht. Dies kann zum Beispiel eine Telefonverbindung zwischen Anrufer und Angerufenem im Telefonnetz der Deutschen Telekom sein. Der Anrufer und der Angerufene haben sich verständigt, daß eine Datendokumentation über das Telekommunikationsnetz erfolgen soll. Im nachfolgenden werden deshalb zwei Fälle der Datendokumentation im einzelnen beschrieben, das heißt es werden die Operations- bzw. Verfahrensschritte angegeben, die für diese Dienstleistung in einer Schaltungsanordnung bzw. in einem System nach Fig. 2 erforderlich sind.

### Fall 1 Dokumentierter Datenfluß Angerufener ==> Anrufer

o **Schritt bzw. Operation 1.1**
   Anrufer signalisiert über sein Endgerät 5 dem Telekommunikationsnetz 1,
   - daß die Dienstleistung "Datendokumentation über ein Telekommunikationsnetz" in Anspruch genommen werden soll;
      der Anrufer löst ein entsprechendes Signal aus, welches vom Endgerät 5 über den Zeichengabekanal 7 zur Vermittlungseinrichtung 2 weitergeleitet wird. Die Vermittlungseinrichtung 2 stellt daraufhin den Informationsweg 9 zwischen Endgerät 5 und Schaltungsanordnung 10 her. Der Abschnitt zwischen Endgerät 5 und Vermittlungseinrichtung 2 des Informationsweges 9 wird wie folgt realisiert:
      a) es besteht ein separater physikalischer Übertragungsweg zwischen Endgerät 5 und Vermittlungseinrichtung 2, oder
      b) der Nachrichtenkanal 8 zwischen Endgerät 5 und Vermittlungseinrichtung 2 wird vorübergehend unterbrochen. Das physikalische Übertragungsmedium, welches zwischen Endgerät 5 und Vermittlungseinrichtung 2 den Nachrichtenkanal 8 ermöglicht, wird vorübergehend vom Informationsweg 9 benutzt oder
      c) der Zeichengabekanal 7 zwischen Endgerät 5 und Vermittlungseinrichtung 2 wird mitgenutzt, um Daten des Informationsweges 9 physikalisch vom Endgerät 5 zur Vermittlungseinrichtung 2 zu übermitteln.

      Alle folgenden Eingaben, Datenaustausche erfolgen über den Informationsweg 9 Endeinrichtung 5 - Vermittlungseinrichtung 2 - Schaltungsanordnung 10:
   - wie die zu dokumentierenden Daten vom Telekommunikationsnetz 1 an ihn weitergeleitet werden sollen, d.h.
      ==> per Briefpost: Mitteilung der Adresse,
      ==> per Fax: Mitteilung der Fax-Nummer,
      ==> per E-Mail: Mitteilung der E-Mail-Adresse;
   - ob das zusätzliche Leistungsmerkmal "Aufbewahrung der zu dokumentierenden Daten im Telekommunikationsnetz 1" in Anspruch genommen werden soll.
o **Schritt bzw. Operation 1.2**
   Der Angerufene signalisiert über sein Endgerät 6 dem Telekommunikationsnetz 1,
   - daß die Dienstleistung "Datendokumentation über ein Telekommunikationsnetz 1" in Anspruch genommen werden soll;
      der Anrufer löst ein entsprechendes Signal aus, welches vom Endgerät 5 über den Zeichengabekanal 7 zur Vermittlungseinrichtung 2 weitergeleitet wird. Die Vermittlungseinrichtung 2 stellt daraufhin den Informationsweg 9 zwischen Endgerät 6 und Schaltungsanordnung 10 her. Der Abschnitt zwischen Endgerät 6 und Vermittlungseinrichtung 2 des Informationsweges 9 wird wie folgt realisiert:
      a) es besteht ein separater physikalischer Übertragungsweg zwischen Endgerät 6 und Vermittlungseinrichtung 3, oder
      b) der Nachrichtenkanal 8 zwischen Endgerät 6 und Vermittlungseinrichtung 3 wird vorübergehend unterbrochen. Das physikalische Übertragungsmedium, welches zwischen Endgerät 6 und Vermittlungseinrichtung 3 den Nachrichtenkanal 8 ermöglicht, wird vorübergehend vom Informationsweg 9 benutzt oder
      c) der Zeichengabekanal 7 zwischen Endgerät 6 und Vermittlungseinrichtung 3 wird mitgenutzt, um Daten des Informationsweges 9 physikalisch vom Endgerät 6 zur Vermittlungseinrichtung 3 zu übermitteln.

      Alle folgenden Eingaben, Datenaustausche erfolgen über den Informationsweg 9 Endeinrichtung 6 - Vermittlungseinrichtung 3 - Schaltungsanordnung 10:
   - wie die Quittung für die Datenübermittlung vom Telekommunikationsnetz 1 an ihn weitergeleitet werden soll, d.h.
      ==> per Briefpost: Mitteilung der Adresse,
      ==> per Fax: Mitteilung der Fax-Nummer,
      ==> per E-Mail: Mitteilung der E-Mail-Adresse;
   - ob das zusätzliche Leistungsmerkmal "Aufbewahrung der zu dokumentierenden Daten im Telekommunikationsnetz 1" in Anspruch genommen werden soll.
o **Schritt bzw. Operation 1.3**
   Das Telekommunikationsnetz 1 hat alle erforderlichen Daten entsprechend den Schritten 1.1 und 1.2 erhalten. Signal an Angerufenen, mit der Datenübermittlung zu beginnen.
o **Schritt bzw. Operation 1.4**
   Angerufener teilt zu dokumentierende Daten an das Telekommunikationsnetz 1 mit.
o **Schritt bzw. Operation 1.5**
   Das Telekommunikationsnetz 1 übermittelt (Fax, E-Mail) bzw. veranlaßt (Briefpost) Übertragung der zu dokumentierenden Daten an den Anrufer auf die entsprechend Schritt 1.1 vorgegebene Weise und bewahrt diese Daten zusätzlich auf, wenn die Aufbewahrung in den Schritten 1.1 und 1.2 beauftragt worden ist.
o **Schritt bzw. Operation 1.6**
   Das Telekommunikationsnetz 1 meldet dem Angerufenem, daß
   - die Weiterleitung der zu dokumentierenden Daten an den Anrufer veranlaßt worden ist;
   - falls Schritte 1.1 bzw. 1.2 entsprechend beantwortet worden sind, eine Abspeicherung der zu dokumentierenden Daten im Telekommunikationsnetz 1 erfolgt;
   - ihm entsprechend Schritt 1.2 auf die vorgegebene Weise (Briefpost, Fax, E-Mail) eine Quittung mit:
      - den zu dokumentierenden Daten,
      - den Empfängerangaben (Name, Adresse),
      - Datum und Uhrzeit des Auftrages zur Datendokumentation vom Anrufer und vom Angerufenen,
      - Datum und Uhrzeit der Erledigung des Auftrages zur Datendokumentation mit Angabe, wie die zu dokumentierenden Daten an den Empfänger übermittelt werden (Briefpost, Fax, E-Mail),
      - der Bestätigung, daß eine Aufbewahrung der zu dokumentierenden Daten im Telekommunikationsnetz 1, falls entsprechend der Schritte 1.1 und 1.2 beauftragt, erfolgt ist, zugehen wird.
o **Schritt bzw. Operation 1.7**
   Beendigung der Dienstleistung "Datendokumentation über ein Telekommunikationsnetz 1".

### Fall 2 Dokumentierter Datenfluß Anrufer ==> Angerufener

erfolgt analog Fall 1.

### Liste der Bezugszeichen

- 1: Telekommunikationsnetz
- 2: Vermittlungseinrichtung des Anrufers
- 3: Vermittlungseinrichtung des Angerufenen
- 4: Schaltungsanordnung zur Steuerung für Vorwärts-
- 5: /Rückwärtstarifierung und anderer Funktionen Endgerät bzw. Einrichtung für Anrufer
- 6: Endgerät bzw. Einrichtung für Angerufenen
- 7: Zeichengabekanäle
- 8: Nachrichtenkanal
- 9: Informationswege zur Vorwärts-/Rückwärtstarifierung
- 10: Schaltungsanordnung zur automatischen Steuerung für Funktionsabläufe bzw. Operationen für die Informations- und Datendokumentation

## Patentansprüche

1. Verfahren zum Betreiben eines Telekommunikationsnetzes mit angeschlossenen Einrichtungen oder Endgeräten von Anrufern und Angerufenen sowie einer zuständigen Vermittlungseinrichtung für den Anrufer und einer zuständigen Vermittlungseinrichtung für den Angerufenen zur Durchführung von Dienstleistungen wie Vor- und Rückwärtstarifierung, **dadurch gekennzeichnet,**
**daß** der Nachrichtenaustausch zwischen Anrufer und Angerufenem über einen Nachrichtenkanal (8) erfolgt,
**daß** zur Vor- oder Rückwärtstarifierung vom Endgerät (5) des Anrufers sowie vom Endgerät (6) des Angerufenen dem Telekommunikationsnetz (1) über Zeichengabekanäle (7) signalisiert wird, daß die Dienstleistung Vor- oder Rückwärtstarifierung in Anspruch genommen werden soll,
**daß** bei Rückwärtstarifierung und bei Vorwärtstarifierung die Höhe des Betrages, die Art der Verrechnung und ob Vor- oder Rückwärtstarifierung vom Endgerät (5) des Anrufers bzw. vom Endgerät (6) des Angerufenen über Informationswege (9) zur Vor- und Rückwärtstarifierung zu einer ersten Schaltungsanordnung (4) zur Steuerung der Vorwärts- und Rückwärtstarifierung des Telekommunikationsnetzes (1) gegeben wird,
**daß** die Einverständnisse des Anrufers und des Angerufenen für die Vor- oder Rückwärtstarifierung und die entsprechenden Informationen und Daten in der ersten Schaltungsanordnung (4) zur Steuerung der Vorwärts- und Rückwärtstarifierung über die Endgeräte (5 und 6) des Anrufers und Angerufenen und über die Informationswege (9) zur Vor- und Rückwärtstarifierung gespeichert werden,
**daß** die übermittelten Informationen und Daten von der ersten Schaltungsanordnung (4) zur Steuerung der Vorwärts- und Rückwärtstarifierung automatisch überprüft und gegebenenfalls prozessorgesteuert Rückfrageoperationen eingeleitet werden,
**daß** bei Vollständigkeit und Übereinstimmung der Angaben das Telekommunikationsnetz (1) die Geldtransaktion in der beauftragten Weise entweder bei Rückwärtstarifierung durch Einziehung des Betrages vom Anrufer durch den Telekommunikationsdiensteanbieter und anschließende Überweisung des Betrages an den Angerufenen erfolgt oder durch Weitergabe der für eine Rechnungsstellung erforderlichen Daten des Anrufers an den Angerufenen veranlaßt oder bei Vorwärtstarifierung durch Einziehen des Betrages vom Angerufenen durch den Telekommunikationsdiensteanbieter und anschließende Überweisung des Betrages an den Anrufer erfolgt oder durch Weitergabe der für eine Rechnungsstellung erforderlichen Daten des Angerufenen an den Anrufer und
**daß** danach die Beendigung der Dienstleistung eingeleitet wird.

2. Verfahren zum Betreiben eines Telekommunikationsnetzes nach Patentanspruch 1, **dadurch gekennzeichnet,**
**daß** zur Durchführung von Dokumentationen von Daten und Informationen über ein Telekommunikationsnetz (1) vom Endgerät (5) des Anrufers sowie vom Endgerät (6) des Angerufenen dem Telekommunikationsnetz (1) über die Zeichengabekanäle (7) signalisiert wird,
**daß** die Dienstleistung "Dokumentation" in Anspruch genommen werden soll, wobei mitgeteilt wird, wie die zu dokumentierenden Daten vom Telekommunikationsnetz (1) weitergeleitet werden sollen, auf welche Weise die Quittung, daß dokumentierte Daten vom Anrufer zum Angerufenen geflossen sind, vom Telekommunikationsnetz (1) an den Anrufer erstellt werden soll bzw. auf welche Weise die Quittung, daß dokumentierte Daten vom Angerufenen zum Anrufer geflossen sind, vom Telekommunikationsnetz (1) an den Angerufenen erstellt werden soll und ob eine Abspeicherung der zu dokumentierenden Daten in einer zweiten Schaltungsanordnung (10) zur automatischen Steuerung für Funktionsabläufe und Operationen für die Informations- und Datendokumentation des Telekommunikationsnetzes (1) erfolgen soll,
**daß** die vom Anrufer und vom Angerufenen jeweils an das Telekommunikationsnetz (1) gemachten Angaben von der zweiten Schaltungsanordnung (10) zur automatischen Steuerung für Funktionsabläufe und Operationen für die Informations- und Datendokumentation automatisch überprüft und gegebenenfalls prozessorgesteuert Rückfrageoperationen eingeleitet werden,
**daß** nach Erhalt und Übereinstimmung aller Angaben dem Lieferanten der Daten, d.h. dem Anrufer oder dem Angerufenem, signalisiert wird, mit der Datenübermittlung zu beginnen,
**daß** das Endgerät (5) des Anrufers, falls der Anrufer der Lieferant der Daten ist bzw. daß das Endgerät (6) des Angerufenen, falls der Angerufene der Lieferant der Daten ist, die zu dokumentierenden Informationen und Daten an das Telekommunikationsnetz (1) mitteilt, das seinerseits die Übertragung der zu dokumentierenden Daten auf die vereinbarte Weise durch Briefpost, Fax oder E-Mail an den Empfänger der Daten, d.h der Angerufene bzw. der Anrufer, veranlaßt und gleichzeitig abspeichert,
**daß** das Telekommunikationsnetz (1) dem Endgerät (5) des Anrufers, falls der Anrufer der Lieferant der Daten ist, bzw. dem Endgerät (6) des Angerufenen, falls der Angerufene der Lieferant der Daten ist, signalisiert, daß die Weiterleitung der zu dokumentierenden Daten an den Empfänger der Daten, d.h. der Angerufene bzw. der Anrufer, auf die vereinbarte Weise veranlaßt worden ist und daß die Abspeicherung der zu dokumentierenden Daten im Telekommunikationsnetz (1) erfolgt,
**daß** prozessorgesteuert die zweite Schaltungsanordnung (10) zur automatischen Steuerung für Funktionsabläufe und Operationen für die Informations- und Datendokumentation automatisch die Erstellung einer Quittung mit allen zu dokumentierenden Informationen und Daten sowie eine Bestätigung der Abspeicherung im Telekommunikationsnetz (1) auf die vereinbarte Weise veranlaßt und
**daß** danach die Beendigung der Operationen für die Dienstleistung "Dokumentation" signalisiert wird.

3. System bestehend aus einem Telekommunikationsnetz mit angeschlossenen Einrichtungen bzw. Endgeräten von Anrufern und Angerufenen sowie einer zuständigen Vermittlungseinrichtung für den Anrufer und einer zuständigen Vermittlungseinrichtung für den Angerufenen **dadurch gekennzeichnet,**
**daß** die zugeordnete Vermittlungseinrichtung (2) des Anrufers und die zugeordnete Vermittlungseinrichtung (3) des Angerufenen über Zeichengabekanäle (7), einen Nachrichtenkanal (8) und Informationswege (9) für Rückwärtstarifierung und Vorwärtstarifierung und zur Dienstleistung "Dokumentation" mit den jeweiligen Endgeräten (5 bzw. 6) des Anrufers bzw. des Angerufenen verbunden sind und
**daß** das Telekommunikationsnetz (1) eine erste Schaltungsanordnung (4) zur Steuerung der Vorwärts-und Rückwärtstarifierung und eine zweite Schaltungsanordnung (10) zur automatischen Steuerung für Funktionsabläufe und Operationen für die Informations- und Datendokumentation enthält, die über die Informationswege (9) mit beiden Vermittlungseinrichtungen (2, 3) verbunden sind.

4. System nach Patentanspruch 3, **dadurch gekennzeichnet,**
**daß** das Telekommunikationsnetz (1) die erste Schaltungsanordnung (4) zur Steuerung der Vorärts- und Rückwärtstarifierung enthält, die über die Informationswege (9) mit den beiden Vermittlungseinrichtungen (2 und 3) für den Anrufer bzw. für den Angerufenen verbunden ist und
**daß** die genannte erste Schaltungsanordnung (4) zur Steuerung der Vorwärts- und Rückwärtstarifierung auch für Steuer- und Rechenoperationen zur Erstellung von Rechnungen, zur Kontrolle des Zahlungseingangs, Überweisung und gegebenenfalls Mahnung sowie zur Speicherung der entsprechenden Informationen und Daten mit Prozessoren und Speichern ausgeführt ist.

5. System nach einem der Patentansprüche 3 oder 4, **dadurch gekennzeichnet,**
**daß** die erste Schaltungsanordnung (4)zur Steuerung für Vorwärts-und Rückwärtstarifierung und die zweite Schaltungsanordnung (10) zur automatischen Steuerung für Funktionsabläufe und Operationen für die Informations- und Datendokumentation mit je einem Mikroprozessor bzw. einem gemeinsamen Mikroprozessor ausgestattet sind und den Mikroprozessoren zugeordnete hochintegrierte Speichereinheiten zur Speicherung der Daten bzw. Informationen für die Rückwärts- und Vorwärtstarifierung und/oder für die Dienstleistung "Datendokumentation" enthalten.

## Claims

1. Method for operating a telecommunications network having connected equipment or terminal devices of calling parties and of called parties and having a switching device responsible for the calling party and having a switching device responsible for the called party to carry out services such as forward billing and reverse billing,
**characterized in that**
the communication between calling party and called party takes place through a message channel (8),
**in that**, for forward or reverse billing, the terminal device (5) of the calling party and the terminal device (6) of the called party signal the telecommunications network (1) through signaling channels (7) that the service of forward or reverse billing is to be used,
**in that**, in the case of reverse billing and in the case of forward billing, the amount, the type of invoicing, and whether forward or reverse billing is involved, are communicated from the terminal device (5) of the calling party or the terminal device (6) of the called party, through information paths (9) for forward and reverse billing, to a first circuit arrangement (4) for controlling the forward and reverse billing of the telecommunications network (1),
**in that** the consent of the calling party and of the called party for the forward or reverse billing, and the corresponding information and data, are stored in the first circuit arrangement (4) for controlling the forward and reverse billing by means of the terminal devices (5 and 6) of the calling and called parties and by means of the information paths (9) for forward and reverse billing,
**in that** the communicated information and data are automatically verified, and if necessary processor-controlled query operations are initiated, by the first circuit arrangement (4) for controlling the forward and reverse billing,
**in that**, if the data are complete and in agreement, the telecommunications network (1) causes the monetary transaction to be executed in the prescribed manner, either in the case of reverse billing by collection by the telecommunications service provider of the amount from the calling party with subsequent transfer of the amount to the called party or alternatively by forwarding to the called party the data of the calling party required for invoicing, or in the case of forward billing by collection by the telecommunications service provider of the amount from the called party with subsequent transfer of the amount to the calling party or alternatively by forwarding to the calling party the data of the called party required for invoicing, and **in that** subsequently the termination of the service is initiated.

2. Method for operating a telecommunications network according to claim 1,
**characterized in that**
in order to document data and information by means of a telecommunications network (1), the telecommunications network (1) is signaled through the signaling channels (7) by the terminal device (5) of the calling party and by the terminal device (6) of the called party that the "documentation" service is to be used, including communication of how the data to be documented is to be transmitted by the telecommunications network (1), the manner in which the confirmation that documented data have passed from the calling party to the called party is to be provided by the telecommunications network (1) to the calling party, or the manner in which the confirmation that documented data have passed from the called party to the calling party is to be provided by the telecommunications network (1) to the called party, and whether storage of the data to be documented is to take place in a second switching arrangement (10) for automatic control for functional sequences and operations for documentation of information and data of the telecommunications network (1),
**in that** the information provided by the calling party and the called party to the telecommunications network (1) is automatically verified, and if necessary processor-controlled query operations are initiated, by the second switching arrangement (10) for automatic control for functional sequences and operations for documentation of information and data,
**in that** upon receipt and matching of all information, the supplier of the data, i.e. the calling party or called party, is signaled to begin transmitting the data,
**in that** the terminal device (5) of the calling party, in the event that the calling party is the supplier of the data, or else the terminal device (6) of the called party, in the event that the called party is the supplier of the data, communicates to the telecommunications network (1) the information and data to be documented, which telecommunications network in turn initiates transmission of the data to be documented to the receiver of the data, i.e. the called party or calling party, in the agreed manner by postal mail, fax or e-mail, and simultaneously stores said data,
**in that** the telecommunications network (1) signals the terminal device (5) of the calling party, in the event that the calling party is the supplier of the data, or else the terminal device (6) of the called party, in the event that the called party is the supplier of the data, that the transmission of the data to be documented to the receiver of the data, i.e. the called party or the calling party, has been initiated in the agreed upon manner and that the data to be documented is being stored in the telecommunications network (1),
**in that** the second switching arrangement (10) for automatic control for functional sequences and operations for documentation of information and data automatically initiates, under processor control and in the agreed upon manner, the generation of a receipt with all information and data to be documented as well as a confirmation of storage in the telecommunications network (1), and
**in that** subsequently the termination of the operations for the "documentation" service is signaled.

3. System consisting of a telecommunications network having connected equipment or terminal devices of calling parties and of called parties and having a switching device responsible for the calling party and having a switching device responsible for the called party, **characterized in that**
the switching device (2) associated with the calling party and the switching device (3) associated with the called party are connected to the respective terminal devices (5 and 6) of the calling and called parties through signaling channels (7), a message channel (8), and information paths (9) for forward and reverse billing and for the "documentation" service, and
**in that** the telecommunications network (1) contains a first circuit arrangement (4) for controlling the forward and reverse billing and a second circuit arrangement (10) for automatic control for functional sequences and operations for documentation of information and data, said first and second circuit arrangements being connected through information paths (9) to the two switching devices (2, 3).

4. System according to claim 3, **characterized in that**
the telecommunications network (1) contains the first circuit arrangement (4) for controlling the forward and reverse billing that is connected through information paths (9) to the two switching devices (2 and 3) for the calling party and called party, and
**in that** the said first circuit arrangement (4) for controlling the forward and reverse billing is also designed with processors and memories for control and computational operations to produce invoices, to monitor receipt of payment, make transfers and if necessary issue reminders, as well as to store the corresponding information and data.

5. System according to any one of claims 3 or 4, **characterized in that**
the first circuit arrangement (4) for controlling the forward and reverse billing and the second circuit arrangement (10) for automatic control for functional sequences and operations for documentation of information and data are each equipped with a microprocessor or are equipped with a shared microprocessor and contain highly integrated memory units associated with the microprocessors for storing the data or information for the reverse billing and forward billing and/or for the "data documentation" service.

## Revendications

1. Procédé destiné à exploiter un réseau de télécommunications avec des équipements ou terminaux connectés d'appelants et d'appelés, ainsi qu'un équipement de commutation affecté à l'appelant et un équipement de commutation affecté à l'appelé, dans le but d'accomplir des prestations de services telles que la tarification en avant ou en arrière, **caractérisé en ce que**
l'échange de messages entre l'appelant et l'appelé a lieu par le biais d'un canal de messagerie (8),
concernant la tarification en avant ou en arrière, le terminal (5) de l'appelant ainsi que le terminal (6) de l'appelé signalent au réseau de télécommunications (1), par le biais de canaux de signalisation (7), que la prestation de services de tarification en avant ou en arrière va être sollicitée,
lors de la tarification en arrière et de la tarification en avant sont indiqués le montant, le type de décompte et si la tarification en avant ou la tarification en arrière sont transmises depuis le terminal (5) de l'appelant ou le terminal (6) de l'appelé via des voies d'information (9) destinées à la tarification en avant et en arrière vers un premier montage de circuits (4) destiné à commander la tarification en avant et en arrière du réseau de télécommunications (1),
les consentements de l'appelant et de l'appelé concernant la tarification en avant ou en arrière et les informations et données correspondantes sont enregistrés dans le premier montage de circuits (4) destiné à commander la tarification en avant et en arrière par le biais des terminaux (5 et 6) de l'appelant et de l'appelé et par le biais des voies d'information (9) destinées à la tarification en avant et en arrière,
les informations et données transmises sont automatiquement vérifiées par le premier montage de circuits (4) destiné à commander la tarification en avant et en arrière et que, le cas échéant, des opérations de double appel commandées par processeur sont déclenchées,
lorsque les indications sont complètes et concordantes, le réseau de télécommunications (1) ordonne la transaction d'argent de la façon mandatée, soit, dans le cas de la tarification en arrière, par recouvrement du montant auprès de l'appelant par le fournisseur de services de télécommunications suivi du virement du montant à l'appelé, ou par communication à l'appelé des données de l'appelant nécessaires à l'établissement d'une facture, soit, en cas de tarification en avant, par recouvrement du montant auprès de l'appelé par le fournisseur de services de télécommunications suivi du virement du montant à l'appelant, ou par communication à l'appelant des données de l'appelé nécessaires à l'établissement d'une facture et
ensuite l'achèvement de cette prestation de services est déclenché.

2. Procédé destiné à exploiter un réseau de télécommunications selon la revendication 1, **caractérisé en ce que**
pour réaliser les documentations de données et d'informations via un réseau de télécommunications (1), le terminal (5) de l'appelant et le terminal (6) de l'appelé signalent au réseau de télécommunications (1), par le biais des canaux de signalisation (7),
qu'ils veulent solliciter la prestation de services « Documentation », tout en faisant savoir comment les données à documenter doivent être retransmises par le réseau de télécommunications (1), comment la confirmation de ce que les données documentées sont passées de l'appelant à l'appelé doit être élaborée par le réseau de télécommunications (1) pour l'appelant ou comment la confirmation de ce que les données documentées sont passées de l'appelé à l'appelant doit être élaborée par le réseau de télécommunications (1) pour l'appelé et si un enregistrement des données à documenter doit avoir lieu dans un second montage de circuits (10) destiné à commander automatiquement les cycles fonctionnels et opérations destinés à la documentation des informations et des données du réseau de télécommunications (1),
le second montage de circuits (10), destiné à commander automatiquement les cycles fonctionnels et opérations destinés à la documentation des informations et des données, vérifie automatiquement les indications fournies au réseau de télécommunications (1) respectivement par l'appelant et par l'appelé et que, le cas échéant, des opérations de double appel commandées par processeur sont déclenchées,
après réception et concordance de toutes les données, le système signale au fournisseur des données, c'est-à-dire à l'appelant ou à l'appelé, que le transfert des données peut commencer,
le terminal (5) de l'appelant, dans le cas où ce dernier est le fournisseur des données, ou le terminal (6) de l'appelé, si ce dernier est le fournisseur des données, communique au réseau de télécommunications (1) les informations et données à documenter, lequel réseau de télécommunications ordonne le transfert des données à documenter de la manière convenue (par courrier postal, téléfax ou courrier électronique) au destinataire des données (c'est-à-dire l'appelé ou l'appelant) tout en les enregistrant,
le réseau de télécommunications (1) signale au terminal (5) de l'appelant, si ce dernier est le fournisseur des données, ou au terminal (6) de l'appelé, si ce dernier est le fournisseur des données, que la transmission des données à documenter au destinataire des données (c'est-à-dire l'appelé ou l'appelant) a été ordonnée de la manière convenue et que l'enregistrement dans le réseau de télécommunications (1) des données à documenter a lieu,
à l'aide d'une commande par processeur, le second montage de circuits (10) destiné à commander automatiquement les cycles fonctionnels et opérations destinés à la documentation des informations et des données ordonne automatiquement l'élaboration d'une confirmation contenant toutes les informations et données à documenter ainsi qu'une confirmation de l'enregistrement, de la façon convenue, dans le réseau de télécommunications (1) et
ensuite l'achèvement des opérations afférentes à la prestation de services « Documentation » est signalé.

3. Système comprenant un réseau de télécommunications avec équipements et/ou terminaux connectés d'appelants et d'appelés, ainsi qu'un équipement de commutation affecté à l'appelant et un équipement de commutation affecté à l'appelé, **caractérisé en ce que**
l'équipement de commutation (2) affecté à l'appelant et l'équipement de commutation (3) affecté à l'appelé sont reliés aux terminaux (5 et 6) respectivement de l'appelant et de l'appelé via des canaux de signalisation (7), un canal de messagerie (8) et des voies d'information (9) pour la tarification en avant et en arrière ainsi que pour la prestation de services « Documentation » et
le réseau de télécommunications (1) contient un premier montage de circuits (4) destiné à piloter la tarification en avant et en arrière et un second montage de circuits (10) destiné à commander automatiquement les cycles fonctionnels et opérations destinés à la documentation des informations et des données, configurations qui sont reliées par le biais des voies d'information (9) avec les deux équipements de commutation (2, 3).

4. Système selon la revendication 3, **caractérisé en ce que**
le réseau de télécommunications (1) contient le premier montage de circuits (4) destiné à commander la tarification en avant et en arrière, configuration qui est reliée par le biais des voies d'information (9) avec les deux équipements de commutation (2 et 3) affectés à l'appelant et à l'appelé et
le premier montage de circuits (4) cité, destiné à commander la tarification en avant et en arrière, est également équipé de processeurs et de mémoires pour accomplir des opérations de commande et de calcul afin d'établir des factures, contrôler les encaissements, effectuer des virements et, le cas échéant, établir des rappels, ainsi que pour enregistrer les informations et données correspondantes.

5. Système selon l'une des revendications 3 ou 4, **caractérisé en ce que**
le premier montage de circuits (4) destiné à commander la tarification en avant et en arrière et le second montage de circuits (10) destiné à commander automatiquement les cycles fonctionnels et les opérations destinés à la documentation des informations et des données sont équipés chacun d'un processeur ou d'un processeur conjoint et qu'ils contiennent des unités d'enregistrement hautement intégrées assignées aux microprocesseurs et destinées à enregistrer les données et informations afférentes à la tarification en avant et en arrière/ou afférentes à la prestation de services « Documentation des données ».
